# FASCICULE DE BREVET EUROPEEN

(11) **EP 1 467 309 B1**
(45) Date de publication et mention de la délivrance du brevet: **13.06.2012**
(21) Numéro de dépôt: 04101338.4
(22) Date de dépôt: 01.04.2004
(51) Int. Cl.: G06K 13/08

(54) **Agencement pour le blocage d'un support de données dans un dispositif d'échange de données**
Vorrichtung zum Blockieren eines Datenträgers in einem Datenträgerleser
Arrangement for the blocking of a data carrier in data exchange device

(30) Priorité: 02.04.2003 FR 0304089
(43) Date de publication de la demande: 13.10.2004
(73) Titulaire: Valeo Sécurité Habitacle, 94046 Créteil Cedex (FR)
(72) Inventeur: Calor, Hervé VALEO SECURITE HABITACLE, Europarc 94042 Creteil Cedex (FR); Canard, Louis VALEO SECURITE HABITACLE, Europarc 94042 Creteil Cedex (FR)
(74) Mandataire: Jacquot, Ludovic R. G.

(56) Documents cités:
- EP-A- 1 162 701
- US-A1- 2001 012 712
- US-B1- 6 332 790

## Description

La présente invention concerne un agencement pour l'échange de données entre un support de données rigide, ou semi-rigide, et un dispositif d'échange de données, notamment de lecture de données contenues dans le support.

L'invention concerne plus particulièrement un tel agencement destiné à équiper un véhicule automobile et dans lequel le support de données, par exemple en forme de carte ou de badge globalement parallélépipédique, porte des données d'identification de l'utilisateur du véhicule qui l'autorisent lorsqu'il introduit le support dans le dispositif de lecture, à utiliser le véhicule en lui permettant notamment de procéder au démarrage du moteur du véhicule.

Pour ce faire, le support de données comporte par exemple un circuit intégré, ou puce, qui est relié à des moyens de lecture du dispositif par des contacts électriques et/ou par une antenne d'échange de données.

Lors de l'introduction du badge ou de la carte dans le dispositif, celle-ci est introduite manuellement dans un logement du boîtier dans lequel le support de données occupe une position active déterminée, et le dispositif qui reçoit la carte ou le badge comporte des moyens pour retenir longitudinalement ce support de données en position active dans le boîtier de manière que l'échange de données soit assuré dans de bonnes conditions.

Selon la conception la plus répandue, ces moyens de retenue sont constitués par des simples freins, c'est-à-dire qu'il s'agit de pattes déformables élastiquement qui coopèrent par friction avec des bords latéraux et/ou avec les grandes faces de la carte.

Une telle conception des moyens de retenue du support de données dans le dispositif de lecture n'est pas entièrement satisfaisante dans le cas d'une application à un véhicule automobile dans lequel le dispositif est soumis, lors du roulage, à de nombreuses vibrations qui provoquent progressivement l'éjection du support de données, ou tout au moins son déplacement par rapport à sa position active dite de lecture.

De plus, dans le cas d'une application à un véhicule automobile, il est nécessaire de pouvoir non seulement retenir le support de données en position active, mais aussi le verrouiller en le bloquant dans cette position, en réponse à un ordre de commande de verrouillage, de manière à éviter que dans certaines configurations d'utilisation du véhicule, le conducteur ou un passager puisse extraire inopinément le support de données du dispositif de lecture.

Afin d'améliorer le confort d'utilisation d'un tel agencement, il a déjà été proposé de prévoir des moyens d'assistance à l'introduction et/ou à l'extraction du support de données dans le dispositif.

A cet effet, il a déjà été proposé que le dispositif comporte un tiroir motorisé dans lequel la carte est mise en place manuellement et qui est ensuite commandée électriquement en déplacement entre sa position de repos dans laquelle on introduit la carte et une position active de lecture dans laquelle le tiroir amène la carte en regard de moyens de lecture.

Une telle conception est complexe et lourde et peu adaptée à son intégration dans le cadre d'une application à un véhicule automobile.

En vue de prévoir des moyens d'assistance à l'éjection, il a aussi été proposé de nombreuses applications dans lesquelles l'utilisateur, lors de l'introduction, agit à l'encontre d'un ressort de rappel qui accumule de l'énergie, la carte étant bloquée en position active par des moyens commandés de retenue, le ressort préalablement bandé restituant l'énergie en vue d'assister l'extraction de la carte, cette assistance pouvant aboutir jusqu'à une éjection complète hors du logement du boîtier.

Une telle conception n'est pas non plus entièrement satisfaisante dans la mesure où elle nécessite un effort important en fin de course d'introduction de la carte et dans la mesure où les moyens connus de retenue à l'encontre de l'effort appliqué à la carte par le dispositif élastique de rappel ne sont pas adaptés à une application à un véhicule automobile, les vibrations lors du roulage risquant de provoquer leur déclenchement et l'éjection inopinée et dangereuse de la carte.

Selon une autre conception connue du document FR- A2- 2.779.563 le support de données comporte une fenêtre, et le boîtier comporte un levier de blocage du support qui est monté pivotant, autour d'un axe transversal, entre une position stable de blocage vers laquelle le levier de blocage du support est rappelé élastiquement et dans laquelle un doigt de blocage formé à l'extrémité libre d'un bras du levier de blocage s'étend verticalement à l'intérieur de la fenêtre, et une position stable escamotée vers laquelle le levier est rappelé élastiquement et dans laquelle le doigt de blocage est situé hors de la fenêtre pour permettre l'extraction du support de données hors du boîtier.

Dans cette conception, le levier de blocage est rappelé élastiquement, vers ses deux positions stables de blocage et escamotée, par un ressort bistable.

La présente invention vise à augmenter la fiabilité de fonctionnement durant toute la durée de vie d'un véhicule et cela quelque soit le nombre d'introduction et d'extraction du support de données.

Afin de remédier aux inconvénients qui viennent d'être mentionnés, l'invention propose un agencement pour l'échange de données entre un support de données rigide, ou semi-rigide, et un dispositif d'échange de données tel que défini à la revendication 1.

Avantageusement, l'agencement selon l'invention comporte moins de composants et présente une grande simplicité de montage de manière à en réduire les coûts, tout en garantissant un blocage robuste du support de donnée et un grand confort d'utilisation.

Grâce à l'invention, le support de données n'est pas exposé à des frottements susceptibles d'en détériorer l'aspect extérieur, puisque la retenue ou le blocage du support de données n'intervient qu'à la fin de la course d'introduction avant l'avalement du support de données.

Selon d'autres caractéristiques de l'invention :
- le cran complémentaire est réalisé dans au moins un bord longitudinal du support de données et est ouvert transversalement pour recevoir le doigt de blocage ;
- l'agencement comporte un organe de commande du déplacement de l'organe de blocage qui est lié en translation, avec jeu longitudinal, à l'organe de blocage et qui est monté mobile par rapport au boîtier entre une position arrière de repos et une position avant de blocage ;
- le support de données comporte un bord transversal avant qui, lors de l'introduction dans le logement, coopère avec l'organe de commande pour provoquer son déplacement de sa position arrière de repos jusqu'à une position correspondant au rattrapage du jeu longitudinal puis entraîner l'organe de blocage vers sa position intermédiaire de retenue et enfin sa position de blocage ;
- l'agencement comporte un organe de rappel élastique de l'organe de commande vers sa position arrière de repos pour constituer au moins un organe d'éjection du support de données ;
- l'organe de commande est rappelé élastiquement d'une part vers une position stable arrière de repos et, d'autre part, vers une position stable extrême avant, par un ressort bistable qui constitue un moyen d'assistance automatique à l'introduction par effet d'avalement et à l'extraction par effet d'éjection du support de données ;
- l'agencement comporte des moyens de butée arrière solidaires du boîtier qui déterminent la position extrême avant de l'organe de commande et/ou la position escamotée de l'organe de blocage ;
- en position arrière de repos, l'organe de commande obture une fenêtre d'introduction du support de données dans le logement ;
- l'agencement comporte des moyens de butée avant solidaires du boîtier qui déterminent la position extrême arrière de repos de l'organe de commande et/ou la position de blocage de l'organe de blocage ;
- l'organe de blocage comporte un bras latéral de blocage, d'orientation globalement longitudinale, dont une extrémité avant est montée pivotante autour d'un axe globalement perpendiculaire au plan horizontal dans lequel est située la direction longitudinale d'introduction (I) du support de données et dont l'extrémité arrière porte le doigt de blocage ;
- le doigt de commande de l'organe de blocage est sollicité en permanence par des moyens élastiques pour coopérer avec le profil de came ;
- les moyens élastiques consistent en une lame élastique transversalement formant le bras latéral de blocage ;
- le profil de came comporte une portion inclinée formant rampe de commande du passage de la position escamotée à la position de retenue et de blocage de l'organe de blocage ;
- le doigt de blocage comporte un flanc transversal avant qui coopère avec un bord arrière du cran de forme complémentaire de manière à faciliter, lors de l'extraction du support de données, le passage de l'organe de blocage de sa position stable de blocage à sa position escamotée ;
- en position active, au moins une partie arrière du support de données fait saillie hors du boîtier de manière à constituer une partie de préhension permettant de l'extraire hors du boîtier ;
- l'organe de blocage présente une symétrie selon un plan vertical globalement perpendiculaire au plan horizontal dans lequel est située la direction longitudinale d'introduction (I) du support de données ;
- le dispositif comporte un organe commandé de verrouillage de l'organe de commande dans la position extrême avant ou de l'organe de blocage dans la position de blocage, le support de données étant en position active ;
- l'organe commandé de verrouillage est un électroaimant dont le noyau mobile constitue un doigt de verrouillage qui peut être commandé en saillie à l'extérieur du boîtier de l'électroaimant pour s'étendre en regard d'une partie de l'organe de commande afin d'empêcher toute translation de ce dernier de sa position extrême avant de blocage vers sa position arrière de repos ;
- l'agencement équipe un véhicule automobile dont les fonctions d'antivol sont partiellement ou totalement assurées par traitement de données dont certaines, contenues dans le support de données, sont représentatives d'un utilisateur autorisé, ou d'un groupe d'utilisateurs autorisés, du véhicule.

D'autres caractéristiques et avantages de l'invention apparaîtront à la lecture de la description détaillée qui suit pour la compréhension de laquelle on se reportera aux dessins annexés dans lesquels :

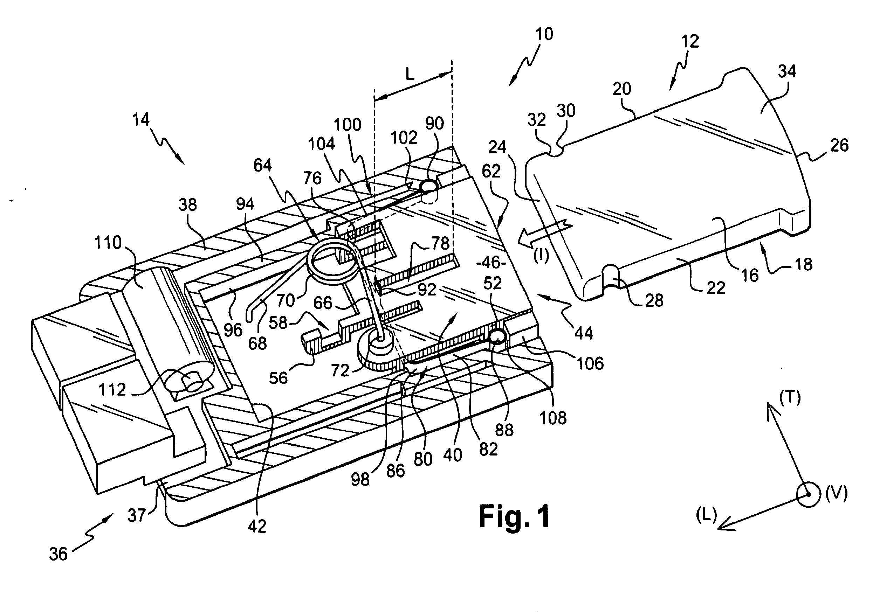

- la figure 1 est une vue schématique en perspective de trois-quarts avant qui illustre les principaux composants d'un agencement selon un mode de réalisation de l'invention et sur laquelle le support de données est illustré hors du boîtier du dispositif d'échange de données ;

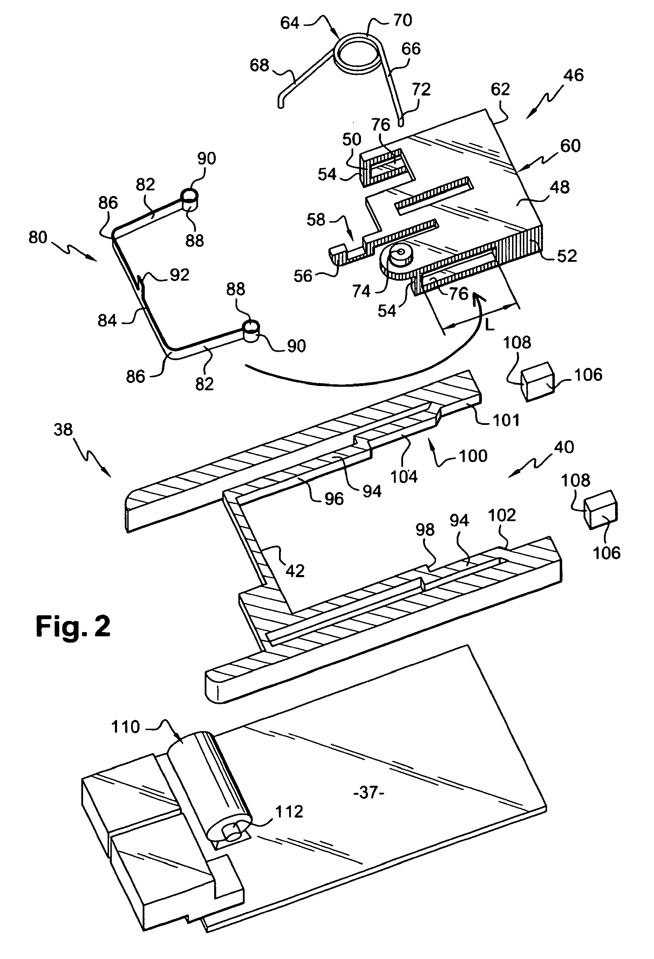

- la figure 2 est une vue en éclaté des principaux composants d'un dispositif d'échange de données selon le mode de réalisation de la figure 1 ;

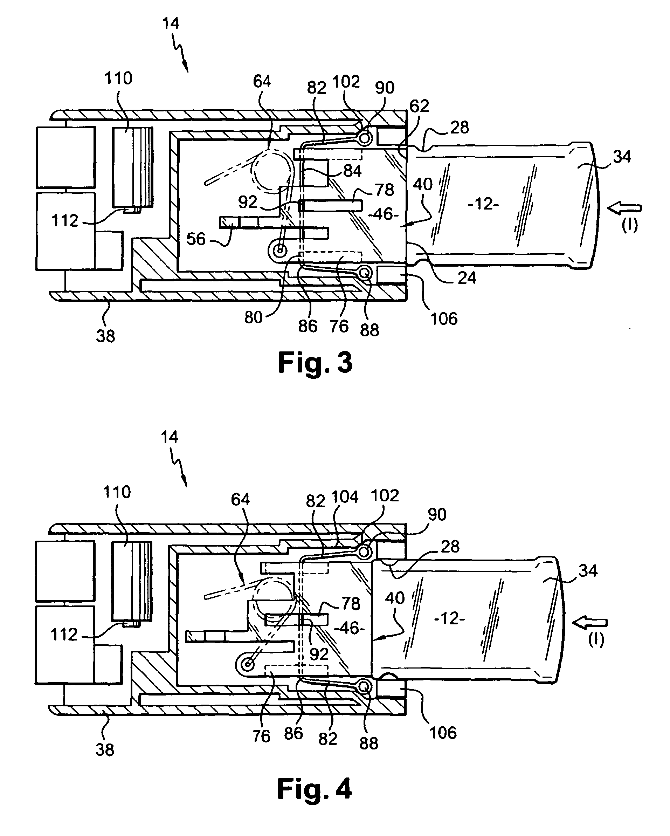

- la figure 3 est une vue de dessus d'un agencement selon la figure 1 qui illustre l'accostage de l'organe de commande par le bord transversal avant du support de données en vue de son introduction dans le logement du boîtier, l'organe de commande étant en position arrière de repos et l'organe de blocage en position escamotée ;
- la figure 4 est une vue similaire à celle de la figure 3, qui illustre un agencement dans lequel le support de données est partiellement introduit dans le logement et l'organe de commande est dans une position intermédiaire entre sa position arrière de repos et sa position extrême avant ;

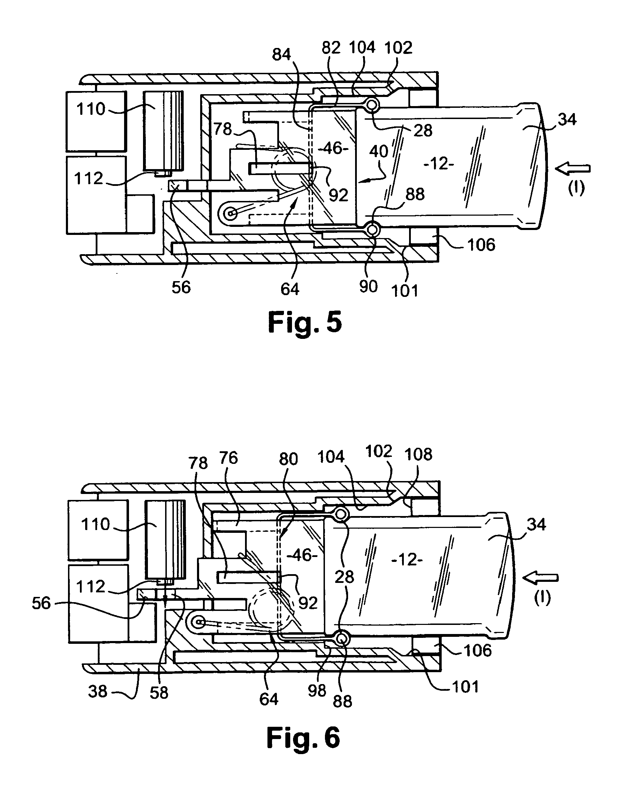

- la figure 5 est une vue similaire à celle de la figure 4 qui illustre l'organe de commande au-delà de sa position intermédiaire, c'est-à-dire la position qu'il occupe lorsque l'organe de blocage quitte la position escamotée pour venir pincer latéralement le support de données dans la position intermédiaire de retenue ;
- la figure 6 est une vue similaire à celle de la figure 5 qui illustre l'organe de commande dans sa position extrême avant qui correspond, après avalement du support de données, à la position de blocage de l'organe de blocage avec le support de données en position active de lecture et dans laquelle il peut être maintenu par un organe commandé de verrouillage.

Dans la description qui va suivre, les termes "longitudinal", "transversal", "avant", "arrière", "supérieur", "inférieur", etc. sont utilisés en référence aux figures et selon le trièdre (L, V, T) de la figure 1 pour faciliter la compréhension de la description et des revendications et ceci à titre non limitatif.

L'agencement 10 conforme aux enseignements de l'invention illustré sur les figures est constitué pour l'essentiel par un support de données ou badge 12 et par un dispositif 14 d'échanges des données contenues dans ce support 12.

Le badge 12 est ici un élément rigide de forme générale parallélépipédique, plus spécifiquement plane symétrique rectangulaire et d'épaisseur réduite de conception.

Le badge 12 comporte une face supérieure 16 et une face inférieure 18 qui s'étendent horizontalement et que délimitent d'une part, dans la direction longitudinale, deux bords latéraux respectivement droit 20 et gauche 22 et, d'autre part, un bord transversal avant 24 et un bord transversal arrière 26.

Le badge 12 comporte, à sa partie avant et au voisinage de son bord transversal avant 24, un cran 28 de blocage dans chacun de ses bords latéraux 20, 22.

Le cran 28 est ouvert transversalement vers l'extérieur et présente, en section selon un plan horizontal, un profil en tronc de V ou de U qui est ainsi délimité par un bord transversal arrière 30 et un bord transversal avant 32.

Le cran 28 est un cran de blocage au sens de l'invention, c'est-à-dire qu'il est destiné à recevoir une partie d'un organe de blocage que comporte le dispositif 14 et qui est susceptible de bloquer le badge 12 lorsque ce dernier occupe une position longitudinale déterminée.

La partie arrière du badge 12 au voisinage de son bord transversal arrière 26 constitue une partie de préhension 34 permettant de le manipuler et notamment de le déplacer longitudinalement parallèlement à son plan général horizontal.

Le badge 12 est un support de données qui est susceptible d'être introduit longitudinalement, c'est-à-dire comme visible sur la figure 1 selon la direction (I) parallèle au plan général horizontal du badge 12, dans un dispositif 14 d'échange de données.

Le dispositif d'échange de données 14 va maintenant être décrit en détail, selon un mode de réalisation préféré de l'invention et en référence aux figures 1 et 2.

Le dispositif 14 d'échange de données comporte un boîtier 36 qui constitue un sous-ensemble comportant des moyens (non représentés) de lecture et/ou d'écriture de données contenues dans le badge 12.

Le boîtier 36 comporte une enveloppe extérieure (non représentée) de forme globalement parallélépipédique qui entoure au moins une platine centrale 38 s'étendant dans un plan horizontal, mieux visible sur la vue en éclaté de la figure 2.

La platine centrale 38 est une plaque ajourée, solidaire d'une plaque inférieure parallèle 37, de manière à constituer un support sur lequel sont montés les différents composants de l'agencement 10.

Ainsi, les appuis et les moyens de guidage, notamment des organes élastiques ou des composants qui sont montés mobiles par rapport au boîtier 36, sont avantageusement réalisés venus de matière avec la platine centrale 38 par moulage en matière plastique.

Le boîtier 36 comporte un logement 40 de forme générale parallélépipédique rectangle en forme de fente horizontale qui est globalement délimité par la platine 38 et est fermé à son extrémité avant par un fond 42, avec son extrémité arrière qui est ouverte en une fenêtre 44 pour permettre l'introduction longitudinale d'arrière en avant du badge 12 selon la direction (I), et son extraction en sens inverse.

Le dispositif 14 d'échange de données comporte un organe de commande 46 qui est monté mobile longitudinalement par rapport à la platine 38 et se déplace en translation entre une position extrême arrière de repos illustrée aux figures 1 et 3, et une position extrême avant de blocage.

L'organe de commande 46 comporte une face supérieure 48 qui est délimitée transversalement par deux bords latéraux droit 50 et gauche 52 qui s'étendent verticalement vers le bas par rapport au plan horizontal formé par la face 48.

La face supérieure 48 s'étend longitudinalement vers l'avant au-delà des faces verticales avant 54 des bords latéraux 50, 52 et elle comporte une queue de verrouillage 56 dans laquelle est réalisé un cran de verrouillage 58 qui est ouvert transversalement et verticalement vers le haut.

L'organe de commande 46 et la face supérieure 48 sont délimités vers l'arrière par une paroi transversale arrière 60 qui s'étend verticalement et définit une face arrière d'accostage 62.

Dans la position extrême arrière de repos illustrée aux figures 1 et 3, l'organe de commande 46 constitue un « volet » qui obture la fenêtre 44 et dont la face arrière d'accostage 62 est globalement affleurante au plan vertical de la fenêtre 44.

L'organe de commande 46 est monté mobile à l'encontre d'un organe de rappel élastique qui est ici constitué par un ressort bistable 64 en fil plié présentant une forme générale d'épingle à cheveux.

Le ressort 64 comporte un premier brin 66 qui se raccorde au second brin 68 par une boucle 70.

Le premier brin 66 comporte, à son extrémité libre opposée à la boucle 70, un tronçon vertical 72 qui est reçu dans un trou borgne 74 que comporte la face supérieure 48 de l'organe de commande 46 de manière à constituer un axe de pivotement, ou une tige d'articulation, entre les deux positions extrêmes stables du ressort 64.

La première position stable du ressort bistable 64 illustrée aux figures 1 et 3, correspond à la position extrême arrière de repos de l'organe de commande 46, et la seconde position stable du ressort 64 illustrée aux figures 5 et 6, correspond à la position extrême avant de blocage de l'organe de commande 46.

Le premier brin 66 du ressort 64 s'étend dans la première position globalement transversalement et dans la seconde globalement longitudinalement de sorte que le second brin 68 qui est initialement décalé longitudinalement vers l'avant par rapport au premier brin 66, pivote dans le sens horaire entre la première et la seconde position stable.

Le ressort bistable 64 constitue un moyen d'assistance automatique à l'introduction par effet d'avalement et à l'extraction par effet d'éjection du support de données 12.

L'organe de commande 46 comporte ici dans chacun de ses bords latéraux 50, 52 des fenêtres 76 et dans sa face supérieure 48 une lumière 78, qui s'étendent longitudinalement de manière rectiligne, et elles présentent chacune une longueur (L) identique.

Le dispositif 14 d'échange de données comporte un organe de blocage 80 qui présente une symétrie selon un plan vertical globalement perpendiculaire au plan horizontal dans lequel est située la direction longitudinale d'introduction (I) du badge 12.

L'organe de blocage 80 a globalement une forme en U et comporte deux bras latéraux de blocage 82, d'orientation globalement longitudinale qui sont reliés entre eux, à leurs extrémités avant, par une barre transversale 84.

Chaque bras de blocage 82 est monté pivotant à son extrémité avant autour d'un axe globalement perpendiculaire au plan horizontal dans lequel est située la direction longitudinale d'introduction (I) du badge 12 et constitué ici par un tronçon coudé de raccordement 86 entre chaque bras 82 et la barre transversale 84.

L'organe de blocage 80 est monté mobile longitudinalement par rapport au boîtier entre une position de blocage dans laquelle il bloque longitudinalement le badge 12 en position active dans le boîtier 36 au moyen d'un doigt de blocage 88 qui est reçu dans le cran 28 complémentaire du badge 12 et une position escamotée, vers laquelle il est rappelé élastiquement, qui permet l'extraction du badge 12 hors du boîtier 36.

A son extrémité arrière, chaque bras latéral 82 comporte un doigt de blocage 88 et un doigt de commande 90 formant suiveur de came qui fait saillie transversalement vers l'intérieur par rapport au bras 82 et s'étendent respectivement vers l'intérieur du logement 40 et vers l'extérieur du boîtier 36.

Dans le mode de réalisation illustré par les figures, l'organe de blocage 80 est entraîné en déplacement avec un jeu longitudinal, c'est-à-dire entraîné en translation par l'organe de commande 46. Pour ce faire, l'organe de blocage 80 est monté de manière à coulisser par rapport à l'organe de commande 46 avec lequel il constitue un sous-ensemble.

Ainsi, chaque tronçon coudé de raccordement 86 d'un bras 82 est reçu dans une fenêtre latérale 76 correspondante de l'organe de commande 46, et chaque bras 82 s'étend librement à l'extérieur des fenêtres 76.

La barre transversale 84 comporte une patte centrale 92 qui s'étend verticalement vers le haut qui constitue un moyen de guidage transversal de l'organe de blocage 80 par rapport à l'organe de commande 46.

La patte 92 solidaire de la barre transversale 84 s'étend à travers la lumière 78 dans laquelle elle est susceptible de se déplacer entre deux positions extrêmes.

Ces positions extrêmes avant et arrière de la patte 92 sont atteintes lorsque la patte 92 vient en butée avec l'une ou l'autre des extrémités longitudinales de la lumière 78.

L'organe de blocage 80 est donc entraîné longitudinalement en déplacement par l'organe 46 de commande, avec un jeu longitudinal ou course qui correspond à la longueur (L) des fenêtres 76 et de la lumière 78, c'est à dire la distance parcourue par la patte 92 entre ses deux positions extrêmes.

Le sous-ensemble constitué de l'organe de blocage 80 et l'organe de commande 46 est monté mobile longitudinalement par rapport à la platine 38 dans le logement 40 du boîtier 36.

Le logement 40 est délimité à l'avant par le fond 42 et transversalement par des bords latéraux 94, respectivement droit et gauche, de la platine 38.

Chaque bord latéral 94 comporte à l'avant d'une part, un tronçon rectiligne 96 qui constitue un rail de guidage coopérant avec les bords latéraux 50, 52 de l'organe de commande 46, le tronçon 96 étant délimité à l'avant par le fond 42, et à l'arrière par un épaulement 98 et, à l'arrière d'autre part, un tronçon arrière 100 formant un profil de came.

Chaque bras latéral 82 de l'organe de blocage 80 est ici réalisé sous la forme d'une lame présentant une élasticité selon la direction transversale de manière que le doigt de commande 90 soit en permanence sollicité élastiquement pour coopérer avec le profil de came 100.

Le profil de came 100 comporte, successivement d'arrière en avant et décalé transversalement de l'extérieur vers l'intérieur du logement 40, une première portion rectiligne longitudinale 101 puis une portion inclinée 102 et une seconde portion rectiligne longitudinale 104 qui est délimitée à l'avant par l'épaulement 98 s'étendant aussi transversalement vers l'intérieur du logement 40.

La portion inclinée 102 constitue une rampe de commande coopérant avec le doigt de commande 90 pour provoquer le passage de l'organe de blocage 80 de sa position escamotée à sa position de retenue et/ou de blocage.

La fenêtre d'introduction 44 du logement 40 est ici délimitée transversalement par des glissières 106 de guidage des bords longitudinaux 20, 22 du badge 12 lors de son introduction.

Chaque glissière 106 comporte une face verticale avant 108 qui est agencée en arrière et en vis-à-vis de la rampe de commande 102 et qui constitue une butée arrière de repositionnement de l'organe de blocage 80 en position escamotée lors de l'extraction du badge 12.

L'agencement 10 comporte aussi des moyens 110 de verrouillage de l'organe de commande 46 en position extrême avant de blocage du badge 12.

En variante, les moyens 110 de verrouillage immobilisent l'organe de blocage 80 en position de blocage.

Dans le mode de réalisation illustré sur les figures, les moyens de verrouillage sont illustrés schématiquement sous la forme d'un électroaimant 110 dont le noyau mobile est susceptible de commander une tige, ou doigt, de verrouillage 112 qui est normalement partiellement escamoté à l'intérieur du corps de l'électroaimant 110 et qui, en position de verrouillage, fait saillie transversalement vers l'extérieur, c'est-à-dire selon une direction perpendiculaire à la direction (I), pour pénétrer dans le cran 58 de la queue de verrouillage 56 qui, comme visible sur la figure 6, s'étend en regard de manière à empêcher alors tout déplacement longitudinal de l'organe de commande 46 et donc de l'organe de blocage 80.

On décrira maintenant le fonctionnement de l'agencement selon l'invention en référence aux figures 3 à 6.

Lorsqu'il n'y a pas de badge 12 dans le logement 40 du boîtier 36, l'organe de commande 46 est, sous l'action du ressort bistable 64, dans sa position extrême arrière de repos dans laquelle, comme visible à la figure 1, sa face arrière 62 obture la fenêtre d'introduction 44.

L'organe de commande 46 ne comporte pas ici de moyen de butée arrière par rapport au boîtier 46 de sorte que sa position extrême arrière de repos est déterminée par la venue en butée du doigt de blocage 88 contre la face 108 des glissières 106 et/ou de la patte centrale 92 contre l'extrémité longitudinale arrière de la lumière 78, qui correspondent chacune à la position escamotée de l'organe de blocage 80.

L'introduction du badge 12 dans le logement 40 du boîtier 36 se fait manuellement selon un mouvement longitudinal d'arrière en avant de manière que le bord transversal avant 24 du badge 12 vienne accoster la face arrière 62 de l'organe de commande 46.

Ensuite comme visible sur la figure 4, sous l'action de l'effort qu'exerce l'utilisateur pour introduire le badge 12 dans le logement 40, l'organe quitte sa position extrême arrière de repos et se déplace longitudinalement vers l'avant à l'encontre du ressort bistable 64 qui est encore dans sa première position stable.

L'organe de blocage 80 se trouve alors en position escamotée dans laquelle le doigt de commande 90 est sollicité élastiquement par le bras 82 contre la rampe de commande 102.

L'organe de blocage 80 étant lié en translation avec un jeu longitudinal, ou course morte, correspondant à la longueur (L) des fenêtres 76 et de la lumière 78, son déplacement provoqué par l'organe de commande 46 ne se produit que lorsque l'organe de commande 46 a effectué une course vers l'avant d'une distance supérieure à la longueur (L) et que la patte centrale 92 est venue en butée contre l'extrémité longitudinale avant de la lumière 78.

Lorsque l'organe de commande 46 a effectué la course morte, il provoque alors en entraînant vers l'avant l'organe de blocage, le passage de ce dernier de la position escamotée à une position dite de retenue illustrée à la figure 5.

Lors du passage de la position escamotée à la position intermédiaire de retenue, le doigt de commande 90 parcourt le profil de came 100 et lorsque le doigt de commande 90 quitte la rampe de commande 102 pour venir en appui sur la portion rectiligne 104, le doigt de blocage 88 pénètre alors automatiquement dans le cran 28 du badge 12 en vis-à-vis.

Dans cette position intermédiaire de retenue de l'organe de blocage 80, le ressort bistable 64 se trouve encore dans son premier état stable.

Au-delà de cette position de retenue, l'état stable du ressort bistable 64 est dépassé et celui-ci change brusquement d'état pour atteindre son second état stable illustré à la figure 6.

Au cours de ce changement brusque d'état, l'organe de commande 46, indépendamment de l'effort qui continue éventuellement d'être appliqué par l'utilisateur du badge 12 en vue de son introduction, entraîne l'organe de blocage 80, et par l'intermédiaire du doigt de blocage 88, le badge 12 longitudinalement vers l'avant jusqu'à sa position extrême avant de blocage avec un effet dit d'avalement, c'est-à-dire avec une assistance fournie par le ressort 64.

Dans la position de blocage illustrée à la figure 6, il est ensuite possible de verrouiller l'organe de commande 46 dans la position extrême avant de blocage en provoquant la sortie complète du doigt de verrouillage 112 qui pénètre dans le cran 58 de la queue de verrouillage 56 s'étendant en regard, de sorte qu'il est alors impossible d'extraire le badge 12 hors du logement 40 tant que le verrouillage est actif.

Dans cette position de blocage, le doigt de commande 90 est alors en appui transversalement sans jeu entre la portion rectiligne 104 et le cran de blocage 28.

L'épaulement 98 présente une dimension transversale légèrement inférieure à celle du doigt de commande 90 de manière à garantir que le doigt de blocage 88 pénètre toujours dans le cran 28.

De plus, une partie du bras 82 est alors immobilisée transversalement entre le rail 96 et les bords latéraux 50, 52 sans possibilité de déplacement transversal.

On obtient ainsi de manière simple et efficace un maintien et un blocage fiable du badge 12.

De même dans cette position de blocage, les faces verticales 54 de l'organe de commande 46 viennent en butée contre le fond 42 de la platine 38.

Lorsque l'on désire extraire le badge 12 du dispositif de lecture et d'échange de données, il faut commencer par procéder au déverrouillage en rétractant le doigt de verrouillage 112 hors du cran 58 de verrouillage.

Il est dès lors possible de procéder à l'extraction du badge 12 hors du boîtier 36 en exerçant sur la partie de préhension 34 du badge 12 un effort de sens opposé, c'est à dire longitudinalement d'avant en arrière, de la gauche vers la droite en considérant la figure 6 et en partant de la position illustrée.

Au cours de ce mouvement d'extraction, le ressort bistable 64 va être progressivement déformé pour quitter son second état stable illustré à la figure 6 et revenir brusquement à son premier état stable illustré à la figure 1.

Cette inversion brusque provoque alors le retour de l'organe de commande 46 vers sa position arrière de repos et de l'organe de blocage 80 vers sa position escamotée.

Le ressort bistable 64 constitue donc ainsi un moyen économique d'assistance à l'introduction et à l'extraction du badge 12, l'organe de commande 46 et le ressort 64 constituant un organe d'éjection semi-automatique du badge 12.

Outre sa fonction d'assistance évoquée plus haut, le ressort bistable 36 procure aussi une sensation tactile à l'utilisateur lors de l'introduction et lors de l'extraction.

Comme on peut le voir sur les figures, en section longitudinale, le doigt de commande 90 présente un flanc transversal avant de profil arrondi pour coopérer à la manière d'une came avec le bord transversal avant 32 du cran 28 du badge 12 de manière à faciliter la libération du badge 12 hors du dispositif qui le recevait précédemment au cours du mouvement d'extraction.

L'invention n'est nullement limitée au mode de réalisation décrit et représenté dans les figures, en effet de nombreuses variantes peuvent être envisagées sans sortir du cadre de la présente invention.

En variante, l'organe de commande 46 est constitué par l'organe de blocage 80 de sorte que le bord transversal avant 24 du badge 12 coopère avec la face arrière de la barre transversale 84 de manière à provoquer le déplacement de l'organe de blocage de sa position escamotée jusqu'à sa position de blocage dans laquelle l'organe de blocage 80 est maintenu, par exemple par coopération de formes entre le doigt de commande 90 et une encoche réalisée dans le tronçon intermédiaire 104.

L'organe élastique de rappel 64 est un ressort à boudin de manière à constituer, avec l'organe de blocage 80, un organe d'éjection automatique du badge 12 lors de l'extraction.

L'invention trouve notamment à s'appliquer à bord d'un véhicule automobile dont les fonctions d'antivol sont partiellement ou totalement assurées par traitement de données dont certaines, contenues dans le support ou badge 12, sont représentatives d'un utilisateur autorisé, ou d'un groupe d'utilisateurs autorisés, du véhicule.

Le traitement des données vise notamment à comparer les données contenues dans le badge 12 avec des données mémorisées à bord du véhicule en vue de permettre l'utilisation autorisée du véhicule, le ou les circuits de traitement assurant la commande totale ou partielle de moyens formant antivol, qu'il s'agisse d'un antivol classique, c'est-à-dire agissant sur la colonne de direction du véhicule, et/ou de moyens empêchant le démarrage du moteur du véhicule et/ou interrompant le fonctionnement du moteur.

## Revendications

1. Agencement (10) pour l'échange de données entre un support de données rigide (12), ou semi-rigide, et un dispositif d'échange de données (14), l'agencement comprenant ledit dispositif
et ledit dispositif comportant un boîtier (36) dans lequel le support (12) est introduit longitudinalement, manuellement d'arrière en avant, dans un logement (40) du boîtier (36) dans lequel il occupe une position active déterminée,
comportant un organe de blocage (80) qui est monté mobile longitudinalement par rapport au boîtier (36,38) entre :
- une position de blocage dans laquelle il bloque longitudinalement le support de données (12) en position active dans le boîtier (36) au moyen d'un doigt de blocage (88) qui est reçu dans un cran (28) complémentaire du support de données (12) ;
- et une position escamotée, vers laquelle il est rappelé élastiquement, qui permet l'extraction du support de données (12) hors du boîtier (36), **caractérisé en ce que**
l'organe de blocage (80) est entraîné longitudinalement en translation vers l'avant au cours de l'introduction (I) du support de données (12) dans le logement (40) du boîtier (36)
et comporte un doigt de commande (90) formant suiveur de came qui coopère avec un profil de came (100) solidaire du boîtier (36)
pour provoquer automatiquement l'introduction du doigt de blocage (88) dans le cran (28) du support de données (12) dès que l'organe de blocage (80) atteint au moins une position longitudinale de retenue qui est intermédiaire entre la position escamotée et la position de blocage.

2. Agencement (10) selon la revendication 1, **caractérisé en ce que** le cran (28) complémentaire est réalisé dans au moins un bord longitudinal (20, 22) du support de données (12) et est ouvert transversalement pour recevoir le doigt de blocage (88).

3. Agencement (10) selon l'une des revendications 1 ou 2, **caractérisé en ce qu'**il comporte un organe de commande (46) du déplacement de l'organe de blocage (80) qui est lié en translation, avec jeu longitudinal, à l'organe de blocage (80) et qui est monté mobile par rapport au boîtier (36, 38) entre une position arrière de repos et une position avant de blocage.

4. Agencement (10) selon la revendication 3, **caractérisé en ce que** le support de données (12) comporte un bord transversal avant (24) qui, lors de l'introduction dans le logement (40), coopère avec l'organe de commande (46) pour provoquer son déplacement de sa position arrière de repos jusqu'à une position correspondant au rattrapage du jeu longitudinal puis entraîner l'organe de blocage (80) vers sa position intermédiaire de retenue et enfin sa position de blocage.

5. Agencement (10) selon l'une des revendications 3 ou 4, **caractérisé en ce qu'**il comporte un organe de rappel élastique (64) de l'organe de commande (80) vers sa position arrière de repos pour constituer au moins un organe d'éjection du support de données (12).

6. Agencement (10) selon l'une des revendications 3 ou 4, **caractérisé en ce que** l'organe de commande (46) est rappelé élastiquement d'une part vers une position stable arrière de repos et, d'autre part, vers une position stable extrême avant, par un ressort bistable (64) qui constitue un moyen d'assistance automatique à l'introduction par effet d'avalement et à l'extraction par effet d'éjection du support de données (12).

7. Agencement (10) selon l'une quelconque des revendications 3 à 6, **caractérisé en ce qu'**il comporte des moyens de butée arrière (42) solidaires du boîtier (36) qui déterminent la position extrême avant de l'organe de commande (46) et/ou la position escamotée de l'organe de blocage (80).

8. Agencement (10) selon l'une quelconque des revendications 3 à 7, **caractérisé en ce que**, en position arrière de repos, l'organe de commande (46) obture une fenêtre (44) d'introduction du support de données (12) dans le logement (40).

9. Agencement (10) selon l'une quelconque des revendications 3 à 8, **caractérisé en ce qu'**il comporte des moyens de butée avant (108) solidaires du boîtier (36) qui déterminent la position extrême arrière de repos de l'organe de commande (46) et/ou la position de blocage de l'organe de blocage (80).

10. Agencement (10) selon l'une quelconque des revendications précédentes, **caractérisé en ce que** l'organe de blocage (80) comporte un bras latéral de blocage (82), d'orientation globalement longitudinale, dont une extrémité avant (86) est montée pivotante autour d'un axe globalement perpendiculaire au plan horizontal dans lequel est située la direction longitudinale d'introduction (I) du support de données (12) et dont l'extrémité arrière porte le doigt de blocage (88).

11. Agencement (10) selon la revendication 10, **caractérisé en ce que** le doigt de commande (90) de l'organe de blocage (80) est sollicité en permanence par des moyens élastiques pour coopérer avec le profil de came (100).

12. Agencement (10) selon la revendication 11, **caractérisé en ce que** les moyens élastiques consistent en une lame élastique transversalement formant le bras latéral de blocage (82).

13. Agencement (10) selon l'une quelconque des revendications précédentes, **caractérisé en ce que** le profil de came (100) comporte une portion inclinée (102) formant rampe de commande du passage de la position escamotée à la position de retenue et de blocage de l'organe de blocage (80).

14. Agencement (10) selon l'une quelconque des revendications précédentes, **caractérisé en ce que** le doigt de blocage (88) comporte un flanc transversal avant qui coopère avec un bord arrière (32) du cran (28) de forme complémentaire de manière à faciliter, lors de l'extraction du support de données (12), le passage de l'organe de blocage (80) de sa position de blocage à sa position escamotée.

15. Agencement selon l'une quelconque des revendications précédentes, **caractérisé en ce qu'**en position active, au moins une partie arrière (34) du support de données (12) fait saillie hors du boîtier (36) de manière à constituer une partie de préhension permettant de l'extraire hors du boîtier (36).

16. Agencement (10) selon l'une quelconque des revendications précédentes, **caractérisé en ce que** l'organe de blocage (80) présente une symétrie selon un plan vertical globalement perpendiculaire au plan horizontal dans lequel est située la direction longitudinale d'introduction (I) du support de données (12).

17. Agencement selon l'une quelconque des revendications précédentes, **caractérisé en ce que** le dispositif comporte un organe (110) commandé de verrouillage de l'organe de commande (46) dans la position extrême avant ou de l'organe de blocage (80) dans la position de blocage, le support de données (12) étant en position active.

18. Agencement selon la revendication précédente, **caractérisé en ce que** l'organe (110) commandé de verrouillage est un électroaimant dont le noyau mobile constitue un doigt de verrouillage (112) qui peut être commandé en saillie à l'extérieur du boîtier de l'électroaimant pour s'étendre en regard d'une partie (58) de l'organe de commande (46) afin d'empêcher toute translation de ce dernier de sa position extrême avant de blocage vers sa position arrière de repos.

19. Agencement selon l'une quelconque des revendications précédentes, **caractérisé en ce qu'**il équipe un véhicule automobile dont les fonctions d'antivol sont partiellement ou totalement assurées par traitement de données dont certaines, contenues dans le support de données (12), sont représentatives d'un utilisateur autorisé, ou d'un groupe d'utilisateurs autorisés, du véhicule.

## Claims

1. Arrangement (10) for the exchange of data between a rigid, or semi-rigid data carrier (12) and a data exchange device (14), the arrangement comprising said device
and said device comprising a housing (36) into which the carrier (12) is inserted longitudinally, manually from behind forwards, into a recess (40) of the housing (36) in which it occupies a determined active position,
and comprising a blocking member (80) which is movably mounted longitudinally with respect to the housing (36, 38) between:
- a blocking position in which it longitudinally blocks the data carrier (12) in the active position in the housing (36) by means of a blocking finger (88) which is received in a notch (28) complementary to the data carrier (12);
- and a retracted position, towards which it is elastically returned, enabling the extraction of the data carrier (12) outside the housing (36),
**characterized in that**
the blocking member (80) is driven longitudinally forwards in translation during the insertion (I) of the data carrier (12) into the recess (40) of the housing (36)
and comprises a control finger (90) forming a cam follower which cooperates with a cam profile (100) integral with the housing (36)
to automatically cause the insertion of the blocking finger (88) into the notch (28) of the data carrier (12) as soon as the blocking member (80) reaches at least a longitudinal retaining position which is intermediate between the retracted position and the blocking position.

2. Arrangement (10) according to Claim 1, **characterized in that** the complementary notch (28) is made in at least one longitudinal edge (20, 22) of the data carrier (12) and is open transversely to receive the blocking finger (88).

3. Arrangement (10) according to one of Claims 1 or 2, **characterized in that** it comprises a control member (46) for displacement of the blocking member (80) which is connected in translation, with longitudinal play, to the blocking member (80) and which is movably mounted with respect to the housing (36, 38) between a rear rest position and a front blocking position.

4. Arrangement (10) according to Claim 3, **characterized in that** the data carrier (12) comprises a front transverse edge (24) which, during insertion into the recess (40), cooperates with the control member (46) for causing its displacement from its rear rest position to a position corresponding to taking up the longitudinal play then driving the blocking member (80) to its intermediate retaining position and finally its blocking position.

5. Arrangement (10) according to one of Claims 3 or 4, **characterized in that** it comprises a member (64) for elastically returning the control body (80) to its rear rest position to constitute at least a member for ejection of the data carrier (12).

6. Arrangement (10) according to one of Claims 3 or 4, **characterized in that** the control member (46) is elastically returned on the one hand to a stable rear rest position and, on the other hand, to a stable front end position, by a bistable spring (64) which constitutes a means of automatic assistance to the insertion of the data carrier (12) through a swallowing effect and to its extraction through an ejection effect.

7. Arrangement (10) according to any of Claims 3 to 6, **characterized in that** it comprises rear stop means (42) integral with the housing (36) that determine the front end position of the control member (46) and/or the retracted position of the blocking member (80).

8. Arrangement (10) according to any of Claims 3 to 7, **characterized in that**, in the rear rest position, the control member (46) closes a window (44) for inserting the data carrier (12) into the recess (40).

9. Arrangement (10) according to any of Claims 3 to 8, **characterized in that** it comprises front stop means (108) integral with the housing (36) which determine the end rear rest position of the control member (46) and/or the blocking position of the blocking member (80).

10. Arrangement (10) according to any of the preceding claims, **characterized in that** the blocking member (80) has a lateral blocking arm (82), of generally longitudinal orientation, whose front end (86) is mounted pivotally about a generally perpendicular axis to the horizontal plane in which the longitudinal direction of insertion (I) of the data carrier (12) is located and whose rear end bears the blocking finger (88).

11. Arrangement (10) according to Claim 10, **characterized in that** the control finger (90) of the blocking member (80) is permanently subjected to stress by elastic means to cooperate with the cam profile (100).

12. Arrangement (10) according to Claim 11, **characterized in that** the elastic means consist of an elastic blade transversely forming the lateral blocking arm (82).

13. Arrangement (10) according to any of the preceding claims, **characterized in that** the cam profile (100) comprises an inclined portion (102) forming a ramp for controlling the passage from the retracted position to the retaining and blocking position of the blocking member (80).

14. Arrangement (10) according to any of the preceding claims, **characterized in that** the blocking finger (88) has a front transverse flank which cooperates with a rear edge (32) of the notch (28) of complementary shape so as to facilitate, during the extraction of the data carrier (12), the passage of the blocking member (80) from its blocking position to its retracted position.

15. Arrangement according to any of the preceding claims, **characterized in that**, in the active position, at least a rear part (34) of the data carrier (12) projects outside the housing (36) so as to constitute a gripping part enabling it to be extracted outside the housing (36).

16. Arrangement (10) according to any of the preceding claims, **characterized in that** the blocking member (80) is symmetrical along a vertical plane generally perpendicular to the horizontal plane in which the longitudinal direction of insertion (I) of the data carrier (12) is situated.

17. Arrangement according to any of the preceding claims, **characterized in that** the device comprises a member (110) controlled by interlocking of the control member (46) in the front end position or of the blocking member (80) in the blocking position, the data carrier (12) being in the active position.

18. Arrangement according to the preceding claim, **characterized in that** the member (110) controlled by interlocking is an electromagnet whose movable core constitutes an interlocking finger (112) which can be controlled to project outside the electromagnet unit to extend opposite a part (58) of the control member (46) to prevent any translation of the latter from its front end blocking position to its rear rest position.

19. Arrangement according to any of the preceding claims, **characterized in that** it equips a motor vehicle whose anti-theft functions are partially or totally ensured by processing data, some of which contained in the data carrier (12), are representative of an authorized user, or group of authorized users of the vehicle.

## Patentansprüche

1. Anordnung (10) für den Datenaustausch zwischen einem steifen oder halbsteifen Datenträger (12) und einer Datenaustauschvorrichtung (14), wobei die Anordnung die Vorrichtung enthält,
und die Vorrichtung ein Gehäuse (36) aufweist, wobei der Träger (12) manuell in Längsrichtung von hinten nach vorne in eine Aufnahme (40) des Gehäuses (36) eingeführt wird, in der er eine bestimmte aktive Stellung einnimmt,
und ein Blockierorgan (80) aufweist, das in Längsrichtung bezüglich des Gehäuses (36, 38) beweglich montiert ist zwischen:
- einer Blockierstellung, in der es den Datenträger (12) in Längsrichtung in der aktiven Stellung im Gehäuse (36) mittels eines Blockierfingers (88) blockiert, der in einer komplementären Kerbe (28) des Datenträgers (12) aufgenommen wird;
- und einer eingezogenen Stellung, in die es elastisch zurückgeholt wird, die die Entnahme des Datenträgers (12) aus dem Gehäuse (36) erlaubt,
**dadurch gekennzeichnet, dass**
das Blockierorgan (80) während der Einführung (I) des Datenträgers (12) in die Aufnahme (40) des Gehäuses (36) längs in Translationsrichtung nach vorne angetrieben wird,
und einen einen Nockenfolger bildenden Steuerfinger (90) aufweist, der mit einem Nockenprofil (100) zusammenwirkt, das fest mit dem Gehäuse (36) verbunden ist,
um automatisch die Einführung des Blockierfingers (88) in die Kerbe (28) des Datenträgers (12) zu bewirken, sobald das Blockierorgan (80) mindestens eine Längs-Haltestellung erreicht, die zwischen der eingezogenen Stellung und der Blockierstellung liegt.

2. Anordnung (10) nach Anspruch 1, **dadurch gekennzeichnet, dass** die komplementäre Kerbe (28) in mindestens einem Längsrand (20, 22) des Datenträgers (12) hergestellt und in Querrichtung offen ist, um den Blockierfinger (88) aufzunehmen.

3. Anordnung (10) nach einem der Ansprüche 1 oder 2, **dadurch gekennzeichnet, dass** sie ein Steuerorgan (46) der Verschiebung des Blockierorgans (80) aufweist, das in Translationsrichtung mit Längsspiel mit dem Blockierorgan (80) verbunden ist, und das bezüglich des Gehäuses (36, 38) zwischen einer hinteren Ruhestellung und einer vorderen Blockierstellung beweglich montiert ist.

4. Anordnung (10) nach Anspruch 3, **dadurch gekennzeichnet, dass** der Datenträger (12) einen vorderen Querrand (24) aufweist, der bei der Einführung in die Aufnahme (40) mit dem Steuerorgan (46) zusammenwirkt, um seine Verschiebung aus seiner hinteren Ruhestellung bis in eine Stellung zu bewirken, die der Beseitigung des Längsspiels entspricht, und dann das Blockierorgan (80) in seine Zwischen-Haltestellung und schließlich seine Blockierstellung anzutreiben.

5. Anordnung (10) nach einem der Ansprüche 3 oder 4, **dadurch gekennzeichnet, dass** sie ein elastisches Rückstellorgan (64) des Steuerorgans (80) in seine hintere Ruhestellung aufweist, um mindestens ein Auswurforgan des Datenträgers (12) zu bilden.

6. Anordnung (10) nach einem der Ansprüche 3 oder 4, **dadurch gekennzeichnet, dass** das Steuerorgan (46) durch eine bistabile Feder (64), die eine Einrichtung zur automatischen Unterstützung der Einführung durch Einzugwirkung und der Entnahme durch Auswurfwirkung des Datenträgers (12) bildet, einerseits in eine stabile hintere Ruhestellung und andererseits in eine stabile vordere Endstellung zurückgestellt wird.

7. Anordnung (10) nach einem der Ansprüche 3 bis 6, **dadurch gekennzeichnet, dass** sie fest mit dem Gehäuse (36) verbundene hintere Anschlageinrichtungen (42) aufweist, die die vordere Endstellung des Steuerorgans (46) und/oder die eingezogene Stellung des Blockierorgans (80) bestimmen.

8. Anordnung (10) nach einem der Ansprüche 3 bis 7, **dadurch gekennzeichnet, dass** in der hinteren Ruhestellung das Steuerorgan (46) ein Fenster (44) zur Einführung des Datenträgers (12) in die Aufnahme (40) verdeckt.

9. Anordnung (10) nach einem der Ansprüche 3 bis 8, **dadurch gekennzeichnet, dass** sie fest mit dem Gehäuse (36) verbundene vordere Anschlageinrichtungen (108) aufweist, die die hintere Endruhestellung des Steuerorgans (46) und/oder die Blockierstellung des Blockierorgans (80) bestimmen.

10. Anordnung (10) nach einem der vorhergehenden Ansprüche, **dadurch gekennzeichnet, dass** das Blockierorgan (80) einen seitlichen Blockierarm (82) mit einer globalen Längsausrichtung aufweist, von dem ein vorderes Ende (86) um eine zur waagrechten Ebene, in der sich die Einführlängsrichtung (I) des Datenträgers (12) befindet, global lotrechte Achse schwenkbar montiert ist, und dessen hinteres Ende den Blockierfinger (88) trägt.

11. Anordnung (10) nach Anspruch 10, **dadurch gekennzeichnet, dass** der Steuerfinger (90) des Blockierorgans (80) durchgehend von elastischen Einrichtungen beaufschlagt wird, um mit dem Nockenprofil (100) zusammenzuwirken.

12. Anordnung (10) nach Anspruch 11, **dadurch gekennzeichnet, dass** die elastischen Einrichtungen aus einer in Querrichtung elastischen Lamelle bestehen, die den seitlichen Blockierarm (82) bildet.

13. Anordnung (10) nach einem der vorhergehenden Ansprüche, **dadurch gekennzeichnet, dass** das Nockenprofil (100) einen geneigten Teil (102) aufweist, der eine Steuerrampe des Übergangs von der eingezogenen Stellung in die Halte- und Blockierstellung des Blockierorgans (80) formt.

14. Anordnung (10) nach einem der vorhergehenden Ansprüche, **dadurch gekennzeichnet, dass** der Blockierfinger (88) eine vordere Querflanke aufweist, die mit einem hinteren Rand (32) der Kerbe (28) komplementärer Form zusammenwirkt, um bei der Entnahme des Datenträgers (12) den Übergang des Blockierorgans (80) von seiner Blockierstellung in seine eingezogene Stellung zu erleichtern.

15. Anordnung nach einem der vorhergehenden Ansprüche, **dadurch gekennzeichnet, dass** in der aktiven Stellung mindestens ein hinterer Bereich (34) des Datenträgers (12) so aus dem Gehäuse (36) vorsteht, dass er einen Greifbereich bildet, der es ermöglicht, ihn aus dem Gehäuse (36) zu ziehen.

16. Anordnung (10) nach einem der vorhergehenden Ansprüche, **dadurch gekennzeichnet, dass** das Blockierorgan (80) eine Symmetrie gemäß einer senkrechten Richtung global lotrecht zu der waagrechten Richtung aufweist, in der sich die Einführlängsrichtung (I) des Datenträgers (12) befindet.

17. Anordnung nach einem der vorhergehenden Ansprüche, **dadurch gekennzeichnet, dass** die Vorrichtung ein gesteuertes Verriegelungsorgan (110) des Steuerorgans (46) in der vorderen Endstellung oder des Blockierorgans (80) in der Blockierstellung aufweist, wobei der Datenträger (12) in aktiver Stellung ist.

18. Anordnung nach dem vorhergehenden Anspruch, **dadurch gekennzeichnet, dass** das gesteuerte Verriegelungsorgan (110) ein Elektromagnet ist, dessen beweglicher Anker einen Verriegelungsfinger (112) bildet, der nach außerhalb des Gehäuses des Elektromagneten vorstehend gesteuert werden kann, um sich gegenüber einem Bereich (58) des Steuerorgans (46) zu erstrecken, um jede Translationsbewegung dieses letzteren aus seiner vorderen Blockierendstellung in seine hintere Ruhestellung zu verhindern.

19. Anordnung nach einem der vorhergehenden Ansprüche, **dadurch gekennzeichnet, dass** sie ein Kraftfahrzeug bestückt, dessen Diebstahlsicherungsfunktionen teilweise oder ganz durch Verarbeitung von Daten gewährleistet werden, von denen bestimmte, die in dem Datenträger (12) enthalten sind, für einen berechtigten Benutzer oder eine Gruppe von berechtigten Benutzern des Fahrzeugs repräsentativ sind.
